# EUROPEAN PATENT APPLICATION

(11) **EP 3 404 970 A1**
(43) Date of publication of application: **21.11.2018**
(21) Application number: 17738676.0
(22) Date of filing: 13.01.2017
(51) Int. Cl.: H04W 56/00, H04W 76/02

(54) **TIME SYNCHRONIZATION METHOD FOR V2V TERMINAL**

(30) Priority: 15.01.2016 US 201662278998 P
(71) Applicant: LG Electronics Inc., Seoul 07336 (KR)
(72) Inventor: YANG, Yoonoh, Seoul 06772 (KR); LEE, Sangwook, Seoul 06772 (KR); LIM, Suhwan, Seoul 06772 (KR); JUNG, Manyoung, Seoul 06772 (KR); HWANG, Jinyup, Seoul 06772 (KR)
(74) Representative: Katérle, Axel
(86) International application number: PCT/KR2017/000473
(87) International publication number: WO 2017/123047

(57) **Abstract**

In the present specification, disclosed is a method for receiving a synchronization signal by a terminal. The method may comprise the steps of: determining whether a first synchronization signal from a base station has a higher priority than that of a second synchronization signal from a global navigation satellite system (GNSS) when a terminal has capability to receive the second synchronization signal from the GNSS; and transmitting a sidelink synchronization signal (SLSS) when it is determined that the first synchronization signal has a higher priority, but a signal strength from the base station is less than or equal to a threshold value.

## Description

### BACKGROUND OF THE INVENTION

### Field of the invention

The present invention relates to mobile communication.

### Related Art

3rd generation partnership project (3GPP) long term evolution (LTE) evolved from a universal mobile telecommunications system (UMTS) is introduced as the 3GPP release 8. The 3GPP LTE uses orthogonal frequency division multiple access (OFDMA) in a downlink, and uses single carrier-frequency division multiple access (SC-FDMA) in an uplink. The 3GPP LTE employs multiple input multiple output (MIMO) having up to four antennas. In recent years, there is an ongoing discussion on 3GPP LTE-advanced (LTE-A) evolved from the 3GPP LTE.

As disclosed in 3GPP TS 36.211 V10.4.0 (2011-12) "Evolved Universal Terrestrial Radio Access (E-UTRA); Physical Channels and Modulation (Release 10)", a physical channel of LTE may be classified into a downlink channel, i.e., a PDSCH (Physical Downlink Shared Channel) and a PDCCH (Physical Downlink Control Channel), and an uplink channel, i.e., a PUSCH (Physical Uplink Shared Channel) and a PUCCH (Physical Uplink Control Channel).

Meanwhile, due to an increase in user requirements for social network service (SNS), communication between terminals which are physically close to each other, that is, device to device (D2D) communication is required.

The D2D communication may be performed between the terminals located within coverage of a base station or may be performed between the terminals located outside the coverage of the base station. Furthermore, the D2D communication may be performed between the terminal located outside the coverage of the base station and the terminal located within the coverage of the base station.

The above-mentioned D2D may also be applied to vehicle-to-everything (V2X). V2X collectively refers to a communication technology through vehicles and all interfaces. V2X may include various implementations such as vehicle-to-vehicle (V2V), vehicle-to-infrastructure (V2I), vehicle-to-person (V2P), and vehicle-to-network (V2N), for example.

In an example of V2V communication, among various implementations of the V2X mentioned above, a vehicle is likely to be located in a shadow area in coverage of a base station or outside the coverage of the base station. However, in the existing 3GPP standard, a D2D terminal adjusts time synchronization based on a synchronization signal (i.e., time of a downlink subframe) from the base station, and thus, the existing 3GPP standard is not appropriate for an implementation example of V2V communication.

### SUMMARY OF THE INVENTION

Accordingly, the disclosure of the specification has been made in an effort to solve the problem.

To achieve the foregoing purposes, the disclosure of the present specification proposes a method for receiving a synchronization signal. The method may be performed by a terminal and comprise: determining whether or not a first synchronization signal from a base station has a higher priority than a second synchronization signal from a global navigation satellite system (GNSS), if the terminal has a capability of receiving the second synchronization signal from the GNSS; and if it is determined that the first synchronization signal from the base station has the higher priority and if a signal strength from the base station is lower than or equal to a threshold, transmitting a sidelink synchronization signal (SLSS).

The method may further comprise: performing a time synchronization based on the second synchronization signal if it is determined that the first synchronization signal has the higher priority, but if the signal strength from the base station is lower than or equal to the threshold; and performing a vehicle to vehicle (V2V) communication after performing the time synchronization.

The method may further comprise: receiving information on whether the first synchronization signal has the higher priority than the second synchronization signal or not.

The method may further comprise: transmitting, to the base station, capability information on whether the terminal has the capability of receiving the second synchronization signal or not.

The method may further comprise: transmitting the SLSS if the second synchronization signal has the higher priority than the first synchronization signal, but if the signal strength from the base station is lower than or equal to the threshold.

To achieve the foregoing purposes, the disclosure of the present specification also proposes a terminal for receiving a synchronization signal. The terminal may comprise: a processor configured to determine whether or not a first synchronization signal from a base station has a higher priority than a second synchronization signal from a global navigation satellite system (GNSS), if the terminal has a capability of receiving the second synchronization signal from the GNSS; and a transceiver configured to transmit a sidelink synchronization signal (SLSS), if it is determined that the first synchronization signal from the base station has the higher priority and if a signal strength from the base station is lower than or equal to a threshold.

According to the disclosure of the present invention, the problem of the conventional technology described above may be solved.

### BRIEF DESCRIPTION OF THE DRAWINGS

FIG. 1 is a wireless communication system.
FIG. 2 illustrates a structure of a radio frame according to FDD in 3GPP LTE.
FIG. 3 illustrates a structure of a downlink radio frame according to TDD in the 3GPP LTE.
FIG. 4 is an exemplary diagram illustrating a resource grid for one uplink or downlink slot in the 3GPP LTE.
FIG. 5 illustrates a structure of a downlink subframe.
FIG. 6. illustrates a structure of an uplink subframe in 3GPP LTE.
FIG. 7 illustrates a measurement and a measurement report.
FIG. 8 illustrates a concept of deice to device (D2D) communication expected to be introduced in a next-generation communication system.FIG. 9 illustrates an example of D2D communication or ProSe communication between UE#1 and UE#2 illustrated in FIG. 8.
FIG. 9 illustrates an example of D2D communication or ProSe communication between UE#1 and UE#2 illustrated in FIG. 8.
FIG. 10 illustrates an example in which UE#2 illustrated in FIG. 8 selects relay UE.
FIG. 11 is a view illustrating the concept of V2V.
FIG. 12 is a view conceptually illustrating the disclosure of the present specification.
FIG. 13 is signal flowchart according to the disclosure of the present specification.
FIGS. 14A and 14B are flowcharts illustrating an operation of a user equipment (UE) located in coverage of a base station (BS) in a situation in which the BS provides priority information, a first threshold (e.g., syncTx_Thr_IC), and a third threshold (e.g., Thr_GNSS) to the UE.
FIG. 15 is a flowchart illustrating an operation of a UE in a situation in which the UE is currently located out of coverage of a BS, but the BS provided priority information, a second threshold (e.g., synTx_Thr_OoC) and a third threshold (e.g., Thr_GNSS) to the UE when the UE was located in coverage of the BS.
FIG. 16 is a flowchart illustrating an operation of a UE in a situation in which a BS provides a first threshold (e.g., syncTx_Thr_IC) to the UE which is located in coverage of the BS and which is not capable of receiving a satellite signal.
FIG. 17 is a flowchart illustrating an operation of a UE in a situation in which the UE is currently located out of coverage of a BS, but the BS provided a second threshold value (e.g., synTx_Thr_OoC) to the UE when the UE, which is not capable of receiving a satellite signal, was located in coverage.
FIG. 18 is a block diagram illustrating a wireless communication system implementing the present disclosure.

### DESCRIPTION OF EXEMPLARY EMBODIMENTS

Hereinafter, based on 3rd Generation Partnership Project (3GPP) long term evolution (LTE) or 3GPP LTE-advanced (LTE-A), the present invention will be applied. This is just an example, and the present invention may be applied to various wireless communication systems. Hereinafter, LTE includes LTE and/or LTE-A.

The technical terms used herein are used to merely describe specific embodiments and should not be construed as limiting the present invention. Further, the technical terms used herein should be, unless defined otherwise, interpreted as having meanings generally understood by those skilled in the art but not too broadly or too narrowly. Further, the technical terms used herein, which are determined not to exactly represent the spirit of the invention, should be replaced by or understood by such technical terms as being able to be exactly understood by those skilled in the art. Further, the general terms used herein should be interpreted in the context as defined in the dictionary, but not in an excessively narrowed manner.

The expression of the singular number in the present invention includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the present invention, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present invention.

It will be understood that when an element or layer is referred to as being "connected to" or "coupled to" another element or layer, it may be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the present invention will be described in greater detail with reference to the accompanying drawings. In describing the present invention, for ease of understanding, the same reference numerals are used to denote the same components throughout the drawings, and repetitive description on the same components will be omitted. Detailed description on well-known arts which are determined to make the gist of the invention unclear will be omitted. The accompanying drawings are provided to merely make the spirit of the invention readily understood, but not should be intended to be limiting of the invention. It should be understood that the spirit of the invention may be expanded to its modifications, replacements or equivalents in addition to what is illustrated in the drawings.

As used herein, 'base station' generally refers to a fixed station that communicates with a wireless device and may be denoted by other terms such as eNB (evolved-NodeB), BTS (base transceiver system), or access point.

As used herein, 'user equipment (UE)' may be stationary or mobile, and may be denoted by other terms such as device, wireless device, terminal, MS (mobile station), UT (user terminal), SS (subscriber station), MT (mobile terminal) and etc.

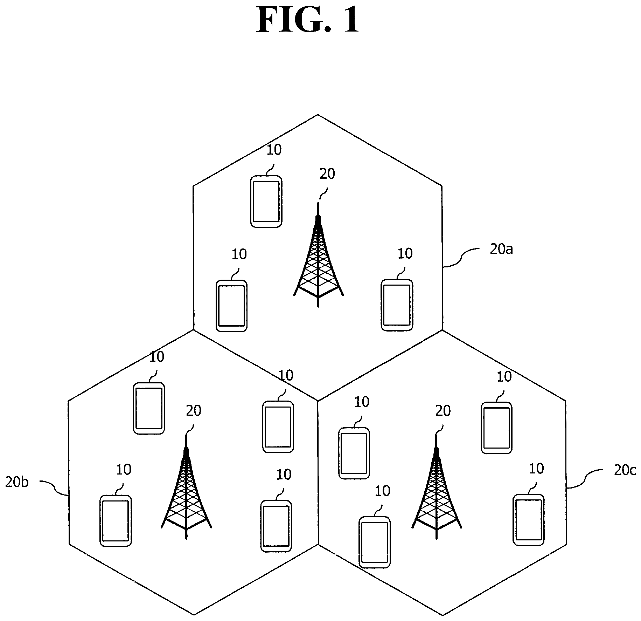

**FIG. 1** **illustrates a wireless communication system.**

As seen with reference to FIG. 1, the wireless communication system includes at least one base station (BS) 20. Each base station 20 provides a communication service to specific geographical areas (generally, referred to as cells) 20a, 20b, and 20c. The cell may be further divided into a plurality of areas (sectors).

The UE generally belongs to one cell and the cell to which the UE belong is referred to as a serving cell. A base station that provides the communication service to the serving cell is referred to as a serving BS. Since the wireless communication system is a cellular system, another cell that neighbors to the serving cell is present. Another cell which neighbors to the serving cell is referred to a neighbor cell. A base station that provides the communication service to the neighbor cell is referred to as a neighbor BS. The serving cell and the neighbor cell are relatively decided based on the UE.

Hereinafter, a downlink means communication from the base station 20 to the UE1 10 and an uplink means communication from the UE 10 to the base station 20. In the downlink, a transmitter may be a part of the base station 20 and a receiver may be a part of the UE 10. In the uplink, the transmitter may be a part of the UE 10 and the receiver may be a part of the base station 20.

Hereinafter, the LTE system will be described in detail.

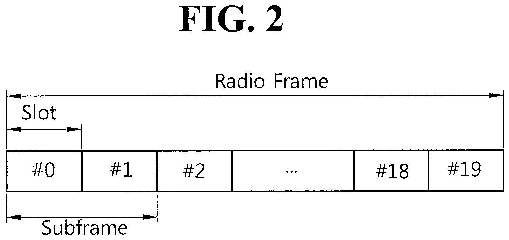

**FIG. 2** **shows a downlink radio frame structure according to FDD of 3rd generation partnership project (3GPP) long term evolution (LTE).**

The radio frame of FIG. 2 may be found in the section 5 of 3GPP TS 36.211 V10.4.0 (2011-12) "Evolved Universal Terrestrial Radio Access (E-UTRA); Physical Channels and Modulation (Release 10)".

The radio frame includes 10 sub-frames indexed 0 to 9. One sub-frame includes two consecutive slots. Accordingly, the radio frame includes 20 slots. The time taken for one sub-frame to be transmitted is denoted TTI (transmission time interval). For example, the length of one sub-frame may be 1ms, and the length of one slot may be 0.5ms.

The structure of the radio frame is for exemplary purposes only, and thus the number of sub-frames included in the radio frame or the number of slots included in the sub-frame may change variously.

Meanwhile, one slot may include a plurality of OFDM symbols. The number of OFDM symbols included in one slot may vary depending on a cyclic prefix (CP).

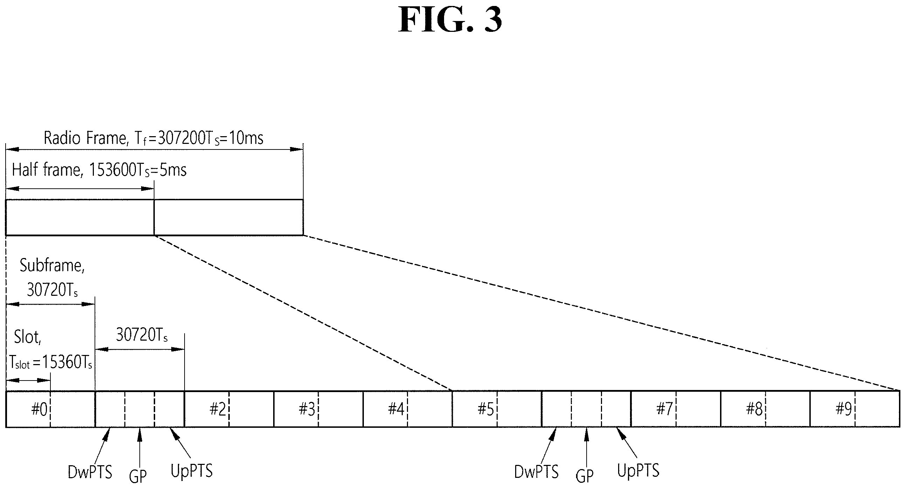

**FIG. 3** **illustrates the architecture of a downlink radio frame according to TDD in 3GPP LTE.**

For this, 3GPP TS 36.211 V10.4.0 (2011-23) "Evolved Universal Terrestrial Radio Access (E-UTRA); Physical Channels and Modulation (Release 8)", Ch. 4 may be referenced, and this is for TDD (time division duplex).

Sub-frames having index #1 and index #6 are denoted special sub-frames, and include a DwPTS(Downlink Pilot Time Slot: DwPTS), a GP(Guard Period) and an UpPTS(Uplink Pilot Time Slot). The DwPTS is used for initial cell search, synchronization, or channel estimation in a terminal. The UpPTS is used for channel estimation in the base station and for establishing uplink transmission sync of the terminal. The GP is a period for removing interference that arises on uplink due to a multi-path delay of a downlink signal between uplink and downlink.

In TDD, a DL (downlink) sub-frame and a UL (Uplink) co-exist in one radio frame. Table 1 shows an example of configuration of a radio frame.

**Table 1]**

| UL-DL configuration | Switch-point periodicity | Subframe index | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

'D' denotes a DL sub-frame, 'U' a UL sub-frame, and 'S' a special sub-frame. When receiving a UL-DL configuration from the base station, the terminal may be aware of whether a sub-frame is a DL sub-frame or a UL sub-frame according to the configuration of the radio frame.

**[Table 2]**

| Special | Normal CP in downlink | | | Extended CP in downlink | | |
|---|---|---|---|---|---|---|
| subframe configuration | DwPTS | UpPTS | | DwPTS | UpPTS | |
| | | Normal CP in uplink | Extended CP in uplink | | Normal CP in uplink | Extended CP in uplink |
| 0 | 6592*Ts | 2192*Ts | 2560*Ts | 7680*Ts | 2192*Ts | 2560*Ts |
| 1 | 19760*Ts | | | 20480*Ts | | |
| 2 | 21952*Ts | | | 23040*Ts | | |
| 3 | 24144*Ts | | | 25600*Ts | | |
| 4 | 26336*Ts | | | 7680*Ts | 4384*Ts | 5120*ts |
| 5 | 6592*Ts | 4384*Ts | 5120*ts | 20480*Ts | | |
| 6 | 19760*Ts | | | 23040*Ts | | |
| 7 | 21952*Ts | | | - | | |
| 8 | 24144*Ts | | | - | | |

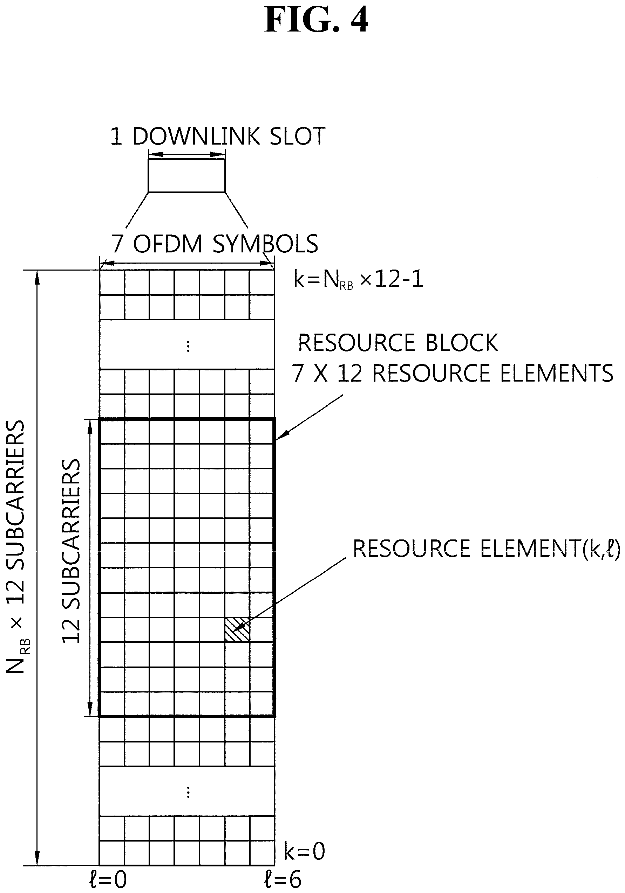

**FIG. 4** **illustrates an example resource grid for one uplink or downlink slot in 3GPP LTE.**

Referring to FIG. 4, the uplink slot includes a plurality of OFDM (orthogonal frequency division multiplexing) symbols in the time domain and NRB resource blocks (RBs) in the frequency domain. For example, in the LTE system, the number of resource blocks (RBs), i.e., NRB, may be one from 6 to 110.

The resource block is a unit of resource allocation and includes a plurality of sub-carriers in the frequency domain. For example, if one slot includes seven OFDM symbols in the time domain and the resource block includes 12 sub-carriers in the frequency domain, one resource block may include 7x12 resource elements (REs).

Meanwhile, the number of sub-carriers in one OFDM symbol may be one of 128, 256, 512, 1024, 1536, and 2048.

In 3GPP LTE, the resource grid for one uplink slot illustrated in FIG. 4 may also apply to the resource grid for the downlink slot.

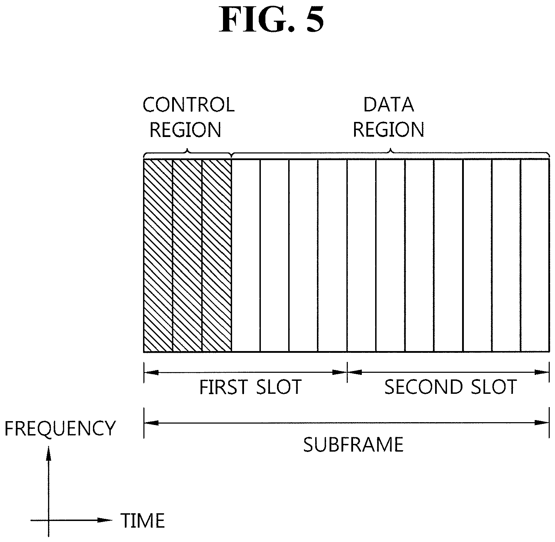

**FIG. 5** **illustrates the architecture of a downlink sub-frame.**

In FIG. 5, assuming the normal CP, one slot includes seven OFDM symbols, by way of example.

The DL (downlink) sub-frame is split into a control region and a data region in the time domain. The control region includes up to first three OFDM symbols in the first slot of the sub-frame. However, the number of OFDM symbols included in the control region may be changed. A PDCCH (physical downlink control channel) and other control channels are assigned to the control region, and a PDSCH is assigned to the data region.

The physical channels in 3GPP LTE may be classified into data channels such as PDSCH (physical downlink shared channel) and PUSCH (physical uplink shared channel) and control channels such as PDCCH (physical downlink control channel), PCFICH (physical control format indicator channel), PHICH (physical hybrid-ARQ indicator channel) and PUCCH (physical uplink control channel).

The PCFICH transmitted in the first OFDM symbol of the sub-frame carries CIF (control format indicator) regarding the number (i.e., size of the control region) of OFDM symbols used for transmission of control channels in the sub-frame. The wireless device first receives the CIF on the PCFICH and then monitors the PDCCH.

Unlike the PDCCH, the PCFICH is transmitted through a fixed PCFICH resource in the sub-frame without using blind decoding. The PHICH carries an ACK (positive-acknowledgement)/NACK (negative-acknowledgement) signal for a UL HARQ (hybrid automatic repeat request). The ACK/NACK signal for UL (uplink) data on the PUSCH transmitted by the wireless device is sent on the PHICH.

The PBCH (physical broadcast channel) is transmitted in the first four OFDM symbols in the second slot of the first sub-frame of the radio frame. The PBCH carries system information necessary for the wireless device to communicate with the base station, and the system information transmitted through the PBCH is denoted MIB (master information block). In comparison, system information transmitted on the PDSCH indicated by the PDCCH is denoted SIB (system information block).

The PDCCH may carry activation of VoIP (voice over internet protocol) and a set of transmission power control commands for individual UEs in some UE group, resource allocation of an upper layer control message such as a random access response transmitted on the PDSCH, system information on DL-SCH, paging information on PCH, resource allocation information of UL-SCH (uplink shared channel), and resource allocation and transmission format of DL-SCH (downlink-shared channel). A plurality of PDCCHs may be sent in the control region, and the terminal may monitor the plurality of PDCCHs. The PDCCH is transmitted on one CCE (control channel element) or aggregation of some consecutive CCEs. The CCE is a logical allocation unit used for providing a coding rate per radio channel's state to the PDCCH. The CCE corresponds to a plurality of resource element groups. Depending on the relationship between the number of CCEs and coding rates provided by the CCEs, the format of the PDCCH and the possible number of PDCCHs are determined.

Control information transmitted through the PDCCH is referred to as downlink control information (DCI). The DCI may include resource allocation of the PDSCH (this is referred to as a DL grant), resource allocation of a PUSCH (this is referred to as a UL grant), a set of transmit power control commands for individual UEs in any UE group, and/or activation of a voice over Internet protocol (VoIP).

The base station determines a PDCCH format according to the DCI to be sent to the terminal and adds a CRC (cyclic redundancy check) to control information. The CRC is masked with a unique identifier (RNTI; radio network temporary identifier) depending on the owner or purpose of the PDCCH. In case the PDCCH is for a specific terminal, the terminal's unique identifier, such as C-RNTI (cell-RNTI), may be masked to the CRC. Or, if the PDCCH is for a paging message, a paging indicator, for example, P-RNTI (paging-RNTI) may be masked to the CRC. If the PDCCH is for a system information block (SIB), a system information identifier, SI-RNTI (system information-RNTI), may be masked to the CRC. In order to indicate a random access response that is a response to the terminal's transmission of a random access preamble, an RA-RNTI (random access-RNTI) may be masked to the CRC.

In 3GPP LTE, blind decoding is used for detecting a PDCCH. The blind decoding is a scheme of identifying whether a PDCCH is its own control channel by demasking a desired identifier to the CRC (cyclic redundancy check) of a received PDCCH (this is referred to as candidate PDCCH) and checking a CRC error. The base station determines a PDCCH format according to the DCI to be sent to the wireless device, then adds a CRC to the DCI, and masks a unique identifier (this is referred to as RNTI (radio network temporary identifier) to the CRC depending on the owner or purpose of the PDCCH.

The uplink channels include a PUSCH, a PUCCH, an SRS (Sounding Reference Signal), and a PRACH (physical random access channel).

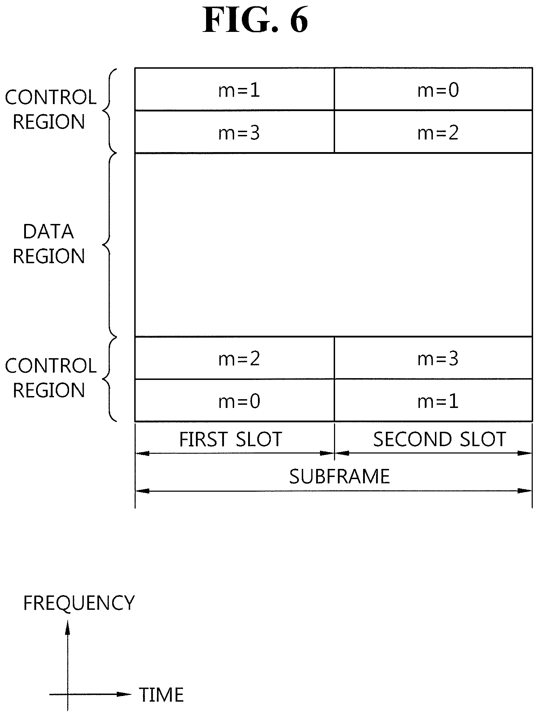

**FIG. 6** **illustrates the architecture of an uplink sub-frame in 3GPP LTE.**

Referring to FIG.6, the uplink sub-frame may be separated into a control region and a data region in the frequency domain. The control region is assigned a PUCCH (physical uplink control channel) for transmission of uplink control information. The data region is assigned a PUSCH (physical uplink shared channel) for transmission of data (in some cases, control information may also be transmitted).

The PUCCH for one terminal is assigned in resource block (RB) pair in the sub-frame. The resource blocks in the resource block pair take up different sub-carriers in each of the first and second slots. The frequency occupied by the resource blocks in the resource block pair assigned to the PUCCH is varied with respect to a slot boundary. This is referred to as the RB pair assigned to the PUCCH having been frequency-hopped at the slot boundary.

The terminal may obtain a frequency diversity gain by transmitting uplink control information through different sub-carriers over time. m is a location index that indicates a logical frequency domain location of a resource block pair assigned to the PUCCH in the sub-frame.

The uplink control information transmitted on the PUCCH includes an HARQ (hybrid automatic repeat request), an ACK (acknowledgement)/NACK (non-acknowledgement), a CQI (channel quality indicator) indicating a downlink channel state, and an SR (scheduling request) that is an uplink radio resource allocation request.

The PUSCH is mapped with a UL-SCH that is a transport channel. The uplink data transmitted on the PUSCH may be a transport block that is a data block for the UL-SCH transmitted for the TTI. The transport block may be user information. Or, the uplink data may be multiplexed data. The multiplexed data may be data obtained by multiplexing the transport block for the UL-SCH and control information. For example, the control information multiplexed with the data may include a CQI, a PMI (precoding matrix indicator), an HARQ, and an RI (rank indicator).Or, the uplink data may consist only of control information.

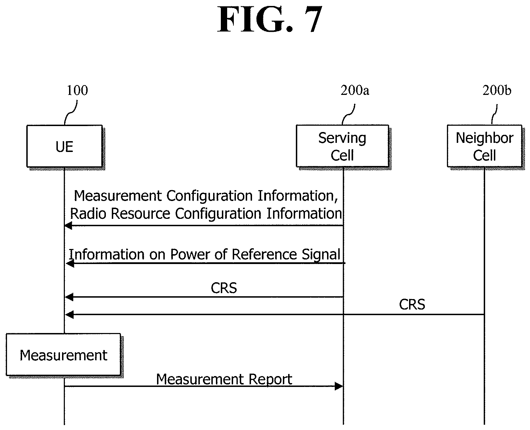

**FIG. 7** **illustrates a measurement and a measurement report.**

In wireless communication systems, it is indispensible to support mobility of the UE 100. Accordingly, the UE 100 continuously measures quality for serving cell that currently provides service and quality for a neighbor cell. The UE 100 reports the measurement result to a network on an appropriate time, and the network provides an optimal mobility to the UE through handover, and so on. Commonly, the measurement of such an object is called a radio resource management (RRM) measurement.

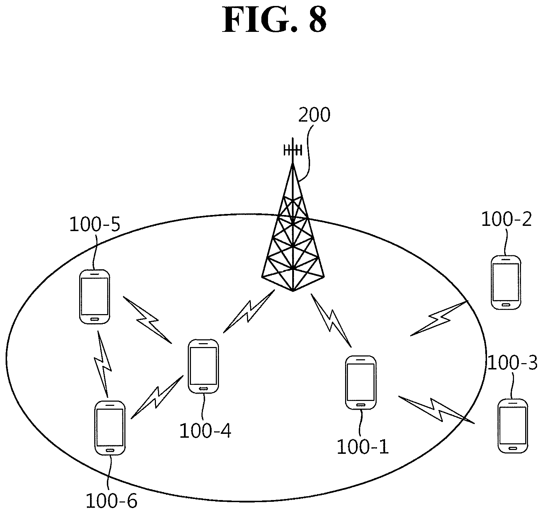

As we may know with reference to FIG. 8, if each of the serving cell 200a and the neighbor cell 200b transmit a cell-specific reference signal (CRS) to the UE 100, the UE 100 performs measurement through the CRS, and transmits the measurement result to the serving cell 200a.

In this time, the UE 100 may perform the measurement in the following three methods.

1) RSRP (reference signal received power): This represents an average reception power of all REs that carry the CRS which is transmitted through the whole bands. In this time, instead of the CRS, an average reception power of all REs that carry the CSI RS may also be measured.

2) RSSI (received signal strength indicator): This represents a reception power which is measured through the whole bands. The RSSI includes all of signal, interference and thermal noise.

3) RSRQ (reference symbol received quality): This represents a CQI, and may be determined as the RSRP/RSSI according to a measured bandwidth or a subband. That is, the RSRQ signifies a signal-to-noise interference ratio (SINR). Since the RSRP is unable to provide a sufficient mobility, in handover or cell reselection procedure, the RSRQ may be used instead of the RSRP.

The RSRQ may be obtained by RSSI/RSSP.

Meanwhile, the UE 100 receives a measurement configuration information element (IE) from the serving cell 100a for the measurement. The message that includes the measurement configuration information element (IE) is called a measurement configuration message. Here, the measurement configuration information element (IE) may be received through a RRC connection reconfiguration message. If the measurement result satisfies a report condition in the measurement configuration information, the UE reports the measurement result to a base station. The message that includes the measurement result is called a measurement report message.

The measurement configuration IE may include measurement object information. The measurement object information is information of an object that is going to perform a measurement by the UE. The measurement object includes at least one of an intra-frequency measurement object which is an object of intra-cell measurement, an inter-frequency measurement object which is an object of inter-cell measurement and an inter-RAT measurement object which is an object of inter-RAT measurement. For example, the intra-cell measurement object indicates a neighbor cell that has a frequency band which is identical to that of a serving cell, the inter-cell measurement object indicates a neighbor cell that has a frequency band which is different from that of a serving cell, and the inter-RAT measurement object indicates a neighbor cell of a RAT which is different from that of a serving cell.

Meanwhile, the UE 100 also receives a radio resource configuration information element (IE) as illustrated in the drawing.

The radio resource configuration dedicated IE is used to configure/modify/cancel radio bearers, to modify MAC configuration, etc. The radio resource configuration dedicated IE includes subframe pattern information. The subframe pattern information is information on a measurement resource restriction pattern on the time domain, for measuring RSRP and RSRQ of a primary cell (PCell).

### <Carrier Aggregation (CA>

A carrier aggregation system is described hereinafter.

A carrier aggregation system aggregates a plurality of component carriers (CCs). A conventional definition of a cell is changed according to carrier aggregation. According to carrier aggregation, a cell may denote a combination of a downlink component carrier and an uplink component carrier or a downlink component carrier alone.

Further, in carrier aggregation, cells may be divided into a primary cell, a secondary cell, and a serving cell. A primary cell denotes a cell operating at a primary frequency, in which a UE performs an initial connection establishment procedure or a connection reestablishment procedure with a BS or which is designated as a primary cell in a handover procedure. A secondary cell denotes a cell operating at a secondary frequency, which is configured once RRC connection is established and is used to provide an additional radio resource.

Carrier aggregation systems may be divided into a contiguous carrier aggregation system in which aggregated carriers are contiguous and a non-contiguous carrier aggregation system in which aggregated carriers are spaced apart from each other. Hereinafter, when simply referring to a carrier aggregation system, it should be understood as including both a case where component carriers are contiguous and a case where component carriers are non-contiguous. Different numbers of component carriers may be aggregated for a downlink and an uplink. A case where the number of downlink component carriers and the number of uplink component carriers are the same is referred to as symmetric aggregation, and a case where the numbers are different is referred to as asymmetric aggregation.

When one or more component carriers are aggregated, component carriers to be aggregated may use the same bandwidths as adopted in an existing system for backward compatibility with the existing system. For example, the 3GPP LTE system supports bandwidths of 1.4 MHz, 3 MHz, 5 MHz, 10 MHz, 15 MHz, and 20 MHz, and the 3GPP LTE-A system may configure a broad band of 20 MHz or more only using the bandwidths of the 3GPP LTE system. Alternatively, instead of using the bandwidths of the existing system, new bandwidths may be defined to configure a broad band.

In order to transmit/receive packet data through a specific secondary cell in carrier aggregation, a UE first needs to complete configuration for the specific secondary cell. Here, configuration means that reception of system information necessary for data transmission/reception in a cell is completed. For example, configuration may include an overall process of receiving common physical-layer parameters necessary for data transmission and reception, media access control (MAC)-layer parameters, or parameters necessary for a specific operation in an RRC layer. A configuration-completed cell is in a state where packet transmission and reception is immediately possible upon receiving information indicating packet data may be transmitted.

A configuration-completed cell may be in an activated or deactivated state. Here, the activated state means that the cell performs data transmission or reception or is ready for data transmission or reception. A UE may monitor or receive a control channel (PDCCH) and a data channel (PDSCH) of an activated cell in order to identify resources (which may be a frequency or time) assigned thereto.

The deactivated state means that transmission or reception of traffic data is impossible and measurement or transmission/reception of minimal information is possible. A UE may receive system information (SI) necessary for receiving a packet from a deactivated cell. However, the UE does not monitor or receive a control channel (PDCCH) and data channel (PDSCH) of the deactivated cell in order to identify resources (which may be a frequency or time) assigned thereto.

### <Device to device (D2D) communication>

Meanwhile, hereinafter, the D2D communication expected to be introduced in a next-generation communication system will be described.

**FIG. 8** **illustrates a concept of deice to device (D2D) communication expected to be introduced in a next-generation communication system.**

Communication between UEs which are physically closed to each other, that is, device to device (D2D) communication) is required due to an increase in user requirements for a social network service (SNS).

In order to reflect the aforementioned requirements, as illustrated in FIG. 8, a scheme that allows the UE#1 100-1, the UE#2 100-2, and the UE#3 100-3 or the UE#4 100-4, the UE#5 100-5, and the UE#6 100-6 to directly communicate with each other without intervention of a base station (eNodeB) 200 is discussed. Of course, the UE#1 100-1 and the UE#4 100-4 may directly communicate with each other under a help of the base station (eNodeB) 200. Meanwhile, the UE#1 100-1 may serve as a relay for the UE#2 100-2 and the UE#3 100-3.

Meanwhile, the D2D communication may be called a proximity service (ProSe). In addition, a UE that performs the proximity service may be called a ProSe UE. Moreover, a link between the UEs used in the D2D communication may be called a sidelink. Frequency bands which may be used for the sidelink are described below.

**[Table 3]**

| Sidelin k band | E-UTRA band | Transmission | | | Reception | | | Duplex mode |
|---|---|---|---|---|---|---|---|---|
| | | F_{UL_low} - F_{UL_high} | | | F_{DL_low} - F_{DL_high} | | | |
| 2 | 2 | 1850 MHz | - | 1910 MHz | 1850 MHz | - | 1910 MHz | HD |
| 3 | 3 | 1710 MHz | - | 1785 MHz | 1710 MHz | - | 1785 MHz | HD |
| 4 | 4 | 1710 MHz | - | 1755 MHz | 1710 MHz | - | 1755 MHz | HD |
| 7 | 7 | 2500 MHz | - | 2570 MHz | 2500 MHz | - | 2570 MHz | HD |
| 14 | 14 | 788 MHz | - | 798 MHz | 788 MHz | - | 798 MHz | HD |
| 20 | 20 | 832 MHz | - | 862 MHz | 832 MHz | - | 862 MHz | HD |
| 26 | 26 | 814 MHz | - | 849 MHz | 814 MHz | - | 849 MHz | HD |
| 28 | 28 | 703 MHz | - | 748 MHz | 703 MHz | - | 748 MHz | HD |
| 31 | 31 | 452.5MHz | - | 457.5MHz | 452.5MHz | - | 457.5MHz | HD |
| 41 | 41 | 2496 MHz | - | 2690 MHz | 2496 MHz | - | 2690 | HD |

Physical channels used for the side link are described below.
- PSSCH(Physical Sidelink Shared Channel)
- PSCCH(Physical Sidelink Control Channel)
- PSDCH(Physical Sidelink Discovery Channel)
- PSBCH(Physical Sidelink Broadcast Channel)

Further, physical signals used for the sidelink are described below.
- Demodulation Reference signal (DMRS)
- Sidelink Synchronization signal (SLSS)

The SLSS includes a primary SLSS (PSLSS) and a secondary SLSS (SSLSS).

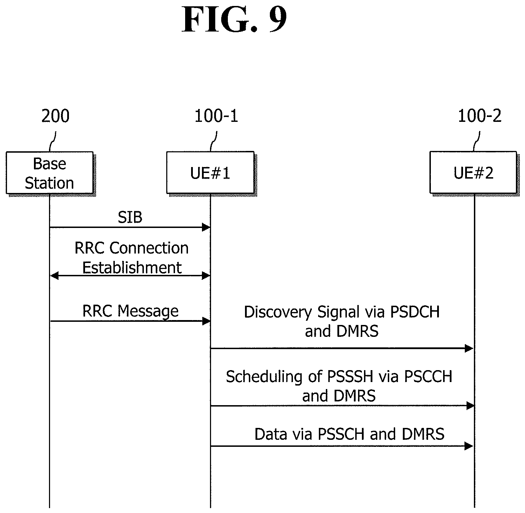

**FIG. 9** **illustrates an example of D2D communication or ProSe communication between UE#1 and UE#2 illustrated in** **FIG. 8****.**

Referring to FIG. 9, the base station 200 broadcasts a system information block (SIB) into the cell.

The SIB may include information on a resource pool associated with the D2D communication. The information on the resource pool associated with the D2D communication may be divided into SIB type 18 and SIB type 19.

The SIB type 18 may include resource configuration information for the D2D communication. In addition, the SIB type 19 may include resource configuration information associated with a D2D discovery.

The SIB type 19 includes discSyncConfig as below.

**[Table 4]**

| SIB type 19 | |
|---|---|
| discSyncConfig | Represents a configuration regarding whether the UE is permitted to receive or transmit synchronization information. When the base station (E-UTRAN) makes the UE transmit the synchronization information by using dedicated signaling, the base station (E-UTRAN) may configure discSyncConfig. |

The discSyncConfig includes SL-SyncConfig. The SL-SyncConfig includes configuration information for receiving the SLSS and transmitting the SLSS as illustrated in a table given below.

**[Table 5]**

| SL-SyncConfig field description | |
|---|---|
| discSyncWindow | Called even a searching window. Represents a synchronization window in which the UE expects the SLSS. A value may be set to w1 or w2. The w1 value represents 5 milliseconds and the w2 value corresponds to a length acquired by the normal CP by 2. |
| syncTxPeriodic | Represents whether the UE transmits the SLSS once within one period of a discovery signal transmitted thereby or periodically (e.g., every 40 ms). In the case of the periodic transmission, the UE further transmits MasterInformationBlock-SL. |
| syncTxThreshIC | Represents a threshold used when the UE is positioned in coverage. When an RSRP value measured for a counterpart UE (recognized like the cell) selected for the sidelink communication is smaller than the threshold, the UE may transmit the SLSS for the sidelink communication with the counterpart UE. |
| txParameters | Includes a parameter regarding a configuration for transmission. |

Meanwhile, the UE#1 100-1 positioned in the coverage of the base station 200 establishes the RRC connection with the base station.

In addition, the UE#1 100-1 receives an RRC message, for example, an RRC Connection Reconfiguration message from the base station 200. The RRC message includes a discovery configuration (hereinafter, referred to as discConfig). The discConfig includes configuration information for a discover resource pool (hereinafter, referred to as DiscResourcePool) for the discovery. The DiscResourcePool includes information illustrated in a table given below.

**[Table 6]**

| DiscResourcePool | |
|---|---|
| discPeriod | May be written even as a discovery period and as a period of a resource assigned in the cell for transmitting/receiving the discovery message may be called a PDSCH period. A value may be rf32, rf64, rf128, rf256, rf512, rf1024, or the like. The value represents the number of radio frames. That is, when the value is rf32, the rf32 represents 32 radio frames. |
| numRepetition | Represents the number of times when subframeBitmap for mapping to a subframe generated within discPeriod is repeated. The base station configures numRepetition and subframeBitmap so that the mapped subframe does not exceed the discPeriod. |
| TF-ResourceConfig | Designates a set of time/frequency resources used for the sidelink communication. |

The TF-ResourceConfig includes information illustrated in a table given below.

**[Table 7]**

| | |
|---|---|
| SL-TF-ResourceConfig-r12 ::= | SEQUENCE { |
| prb-Num-r12 | INTEGER (1..100), |
| prb-Start-r12 | INTEGER (0..99), |
| prb-End-r12 | INTEGER (0..99), |
| offsetIndicator-r12 | SL-OffsetIndicator-r12, |
| subframeBitmap-r12 | SubframeBitmapSL-r12 |
| } | |

The SubframeBitmapSL is illustrated in a table given below.

**[Table 8]**

| | |
|---|---|
| SubframeBitmapSL | May be written even as discoverySubframeBitmap and designates a subframe bitmap representing a resource used for the sidelink. A value may be designated as bs4, bs8, bs12, bs16, bs30, bs40, bs40, and the like. For example, the bs40 value means a bit string length 40. |

The SL-OffsetIndicator includes information illustrated in a table given below.

**[Table 9]**

| | |
|---|---|
| SL-OffsetIndicator | May be written even as discoveryOffsetIndicator and represents an offset of a first period of the resource pool within an SFN cycle. |
| SL-OffsetIndicatorSync | May be written even as SyncOffsetIndicator and represents a relationship between SFNs including a synchronization resource and the subframes according to an equation. |
| | (SFN*10+ Subframe Number) mod 40 = SL-OffsetIndicatorSync. |

Meanwhile, the UE#1 100-1 may transmit the discovery signal through the PDSCH in order to discover whether an appropriate UE is present therearound or notify the presence of the UE#1 100-1 for the D2D communication or ProSe communication.

Meanwhile, further, the UE#1 100-1 may transmit scheduling assignment (SA) through the PSCCH. In addition, the UE#1 100-1 may transmit the PSSCH including data based on the scheduling assignment (SA).

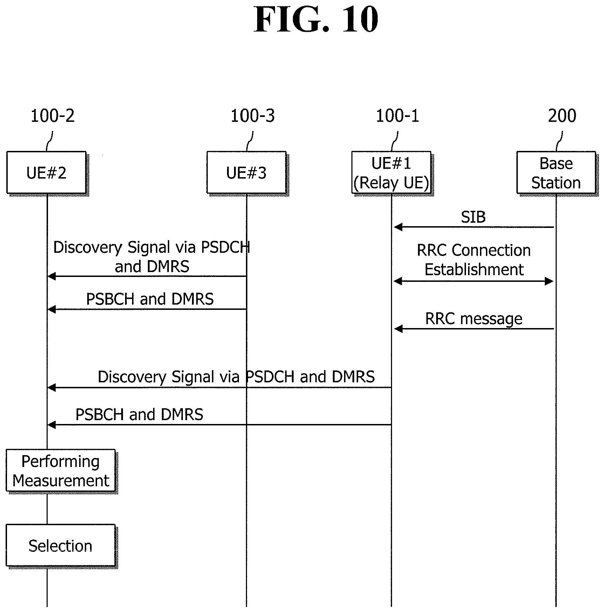

**FIG. 10** **illustrates an example in which UE#2 illustrated in** **FIG. 8** **selects relay UE.**

Referring to FIG. 10 together with FIG. 8, the UE#2 100-2 located outside the coverage of the base station receives a discovery signal from adjacent UEs and a DMRS for demodulating the discovery signal in order to communicate with the D2D communication with the UE#1 100-1 which is located in the coverage of the base station to operate as the relay UE. Further, UE#2 100-2 receives a PSBCH and the DMRS for demodulating the PSBCH from the adjacent UEs.

Then, the UE #2 100-2 performs measurement based on the received signals.

The measurement includes measurement of sidelink reference signal received Power (S-RSRP) and measurement of sidelink discovery reference signal received power (SD-RSRP).

Herein, the S-RSRP means average received power on a resource element (RE) including the DMRS for demodulating the PSBCH received in six middle PBBs. In this case, power per RE is determined from energy received on a part other than a CP part in an OFDM symbol.

The SD-RSRP means the average received power on the RE including the DMRS for demodulating the PSDCH when the CRC is successful according to successful decoding of the PSDCH including the discovery signal.

When the measurement is completed, the UE#2 100-2 selects the UE#1 100-1 which may operate as the relay UE based on a result of the measurement, that is, a measurement result of the SD-RSRP

### <V2X(VEHICLE-TO-EVERYTHIHG)>

The above-mentioned D2D may also be applied to vehicle-to-everything (V2X). V2X collectively refers to a communication technology through vehicles and all interfaces. V2X may be implemented as follows.

First, in V2X, 'X' may be a vehicle. In this case, V2X may be referred to as V2V (vehicle-to-vehicle), which may mean communication between vehicles.

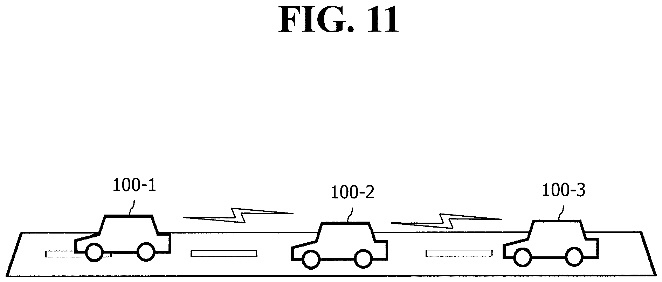

**FIG. 11** **is a view illustrating the concept of V2V.**

As can be seen with reference to FIG. 11, vehicles (that is, the wireless devices mounted on vehicles) 100-1, 100-2, and 100-3 may communicate with each other.

Meanwhile, in V2X, 'X' may refer to a person or pedestrian. In this case, V2X may be represented as vehicle-to-person or vehicle-to-pedestrian (V2P). Here, the pedestrian is not necessarily limited to a person who is on the move by foot and may include a person who rides a bicycle, or a driver or a passenger of a vehicle (lower than a certain speed).

Alternatively, 'X' may be an infrastructure/network. In this case, V2X may be referred to as vehicle-to-infrastructure (V2I) or vehicle-to-network (V2N) and may refer to communication between a vehicle and a roadside unit (RSU) or between a vehicle and a network. The roadside unit may be a unit indicating a traffic-related infrastructure, for example, a speed. The roadside unit may be implemented in a base station or a fixed terminal.

In an example of V2V communication, among various implementations of the V2X mentioned above, a vehicle is likely to be located in a shadow area in coverage of a base station or outside the coverage of the base station. However, in the existing 3GPP standard, a D2D terminal adjusts time synchronization based on a synchronization signal (i.e., time of a downlink sub frame) from the base station, and thus, the existing 3GPP standard is not appropriate for an implementation example of V2V communication.

### <Disclosure of present specification>

Therefore, the disclosure of the present specification provides a method for solving the above-mentioned problems. Specifically, the disclosure of the present specification proposes procedures for allowing a synchronization signal (e.g., a signal from a satellite) other than a synchronization signal from a base station (BS) to be used as a reference for V2V communication.

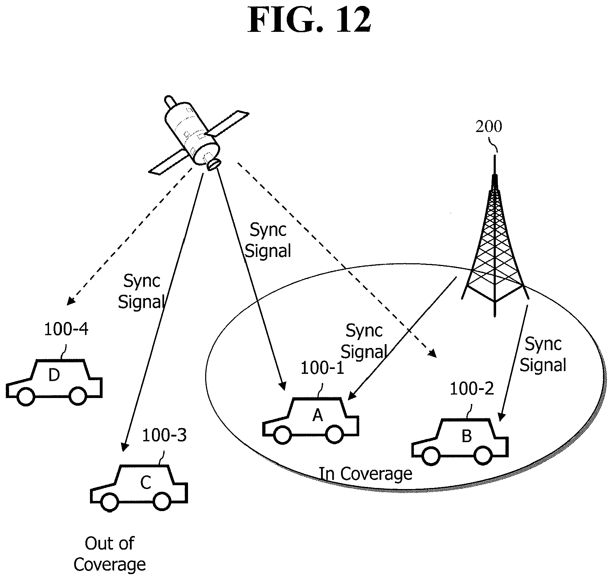

**FIG. 12** **is a view conceptually illustrating the disclosure of the present specification.**

Referring to FIG. 12, V2V terminal A 100-1 and V2V terminal B 100-2 are present in coverage (IC) of a BS, and V2V terminal C 100-3 and V2V terminal D 100-4 are present out of coverage (OoC). The V2V terminal A 100-1 and the V2V terminal C 100-3 may receive signals from satellites. However, the V2V terminal B 100-2 and the V2V terminal D 100-4 may receive or may not receive a weak signal from satellites, as indicated by the dotted line.

Since the V2V terminal C 100-3 is located outside the coverage of the BS, the V2V terminal C 100-3 may not receive a synchronization signal from the BS. However, the V2V terminal C 100-3 may be able to receive a signal from a satellite, and thus, the signal from the satellite may be utilized as a synchronization signal for V2V communication. The signal from the satellite may be, for example, a global positioning system (GPS) signal or a global navigation satellite system (GNSS) signal.

The V2V terminal A 100-1 may receive a signal from a satellite, but the V2V terminal A 100-1 may also receive a synchronization signal in coverage (IC) of the BS 200. In this case, there may be a problem that it is unclear as to which signal should be used first by the V2V terminal A 100-1 to adjust time synchronization.

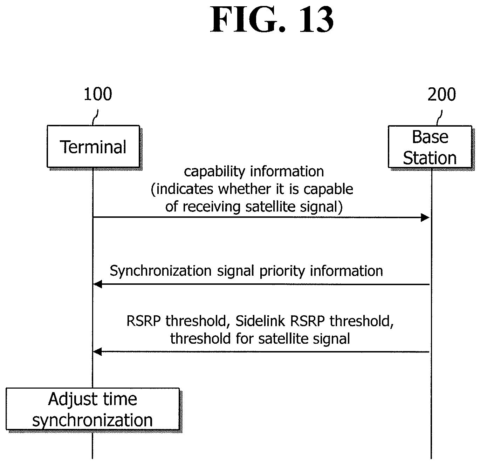

Thus, in the disclosure of the present specification, the BS provides priority information between synchronization signals to a V2V terminal. This will be described with reference to FIG. 13.

**FIG. 13** **is signal flowchart according to the disclosure of the present specification.**

First, the V2V terminal 100 transmits capability information to the base station 200. The capability information may include information as to whether the corresponding V2V terminal 100 is capable of receiving a signal from the satellite.

The capability information has a size of 1 bit and may include bit 1 if it is capable of receiving a signal from the satellite and may include bit 0 otherwise.

Then, the BS 200 provides the V2V terminal 100 with priority information of a synchronization signal. The priority information may indicate priority between a signal from the satellite and a synchronization signal from the base station. For example, the priority information may indicate GNSS>eNB or eNB>GNSS. Alternatively, the priority information may indicate only a highest one (e.g., GNSS or eNB). In this case, it may be considered that a next ranking is determined automatically. Meanwhile, the V2V terminal may perform time synchronization based on an SLSS received from a neighboring terminal. However, in the present specification, an example in which the V2V terminal is located outside the coverage of the base station or located in a shadow area is mainly described, it is assumed that the SLSS from the neighboring terminal is set to a lowest ranking. For example, priority may be GNSS>eNB>SLSS or eNB>GNSS>SLSS. The priority information may have a size of 1 bit. For example, bit 1 may represent GNSSGNSS>eNB>SLSS, and bit 0 may represent eNB>GNSS>SLSS. Or vice versa.

Also, the BS 200 provides one or more of a first threshold (e.g., syncTx_Thr_IC) for RSRP calculated based on a signal from the base station, a second threshold (e.g., synTx_Thr_OoC) for an RSRP calculated based on a sidelink signal (e.g., SLSS) received from a neighboring terminal, and a third threshold (e.g., Thr GNSS) for strength of a signal received from a satellite to the terminal 100. Here, the first threshold (e.g., syncTx_Thr_IC) is a threshold value for determining whether the corresponding V2V terminal should transmit SLSS by itself within the coverage of the base station. That is, if the value of the RSRP calculated based on the signal received from the base station is lower than the first threshold (e.g., syncTx_Thr_IC), the V2V terminal should transmit the SLSS. Meanwhile, the second threshold value (synTx_Thr_OoC) is a threshold value for determining whether the V2V terminal located outside the coverage of the base station should transmit the SLSS by itself. That is, when the V2V terminal located outside the coverage of the base station receives the sidelink signal from the neighboring terminal, if the value of the RSRP calculated based on the received sidelink signal is lower than the second threshold (e.g., synTx_Thr_OoC), the V2V terminal should transmit SLSS. Meanwhile, the third threshold value (e.g., Thr GNSS) is a value for determining whether the V2V terminal is positioned in dense buildings of the downtown area, underground or a tunnel so it cannot properly receive a signal from a satellite.

When the priority information indicates that the signal from the satellite is higher in priority than the synchronization signal from the base station, the V2V terminal 100 may adjust synchronization based on the signal from the satellite, whereas if the priority information indicates that the signal from the base station is higher in priority than the signal from the satellite, the V2V terminal 100 may adjust synchronization based on the synchronization signal from the base station.

When the V2V terminal 100 is not capable of receiving a signal from a satellite so it transmits bit 0 to the base station as priority information, the base station 200 may not provide priority information or may provide priority information such as eNB>SLSS, for example. The base station 200 may provide the V2V terminal 100 with at least one of the first threshold (e.g., syncTx_Thr_IC) and the second threshold (e.g., synTx_Thr_OoC). In this manner, when the BS does not provide the priority information, the V2V terminal 100 may regard the signal from the BS as a highest priority.

Hereinafter, an operation scheme when priority information is provided from a base station and an operation scheme when priority information is not provided will be separately described below.

### I. Scheme 1: Case where priority information is provided from BS

1-1. Case where the BS provides a UE located within the coverage of the BS with priority information, a third threshold (e.g., Thr_GNSS) regarding signal strength from a satellite, and a first threshold (e.g., syncTx_Thr_IC) for RSRP based on a signal from the BS

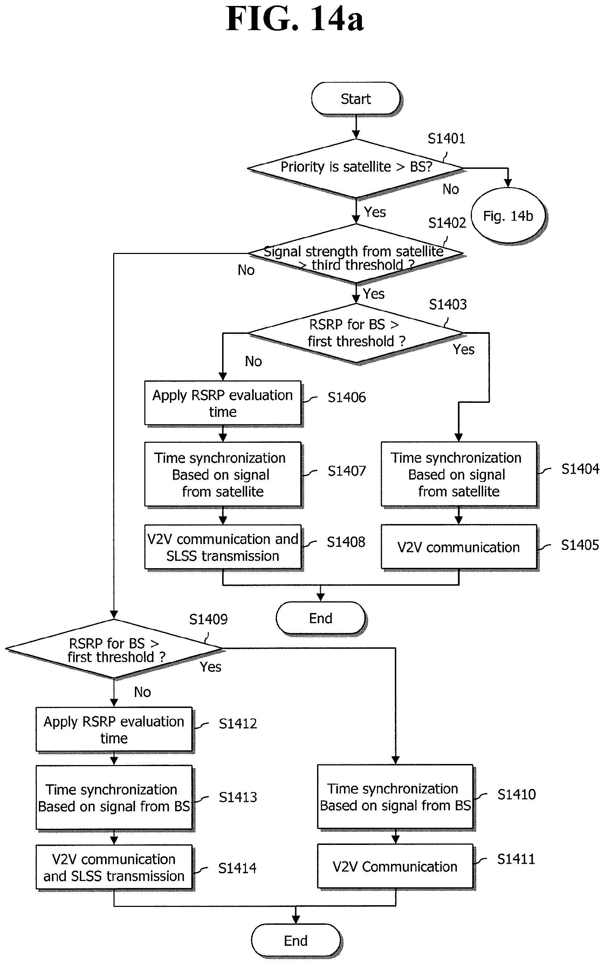

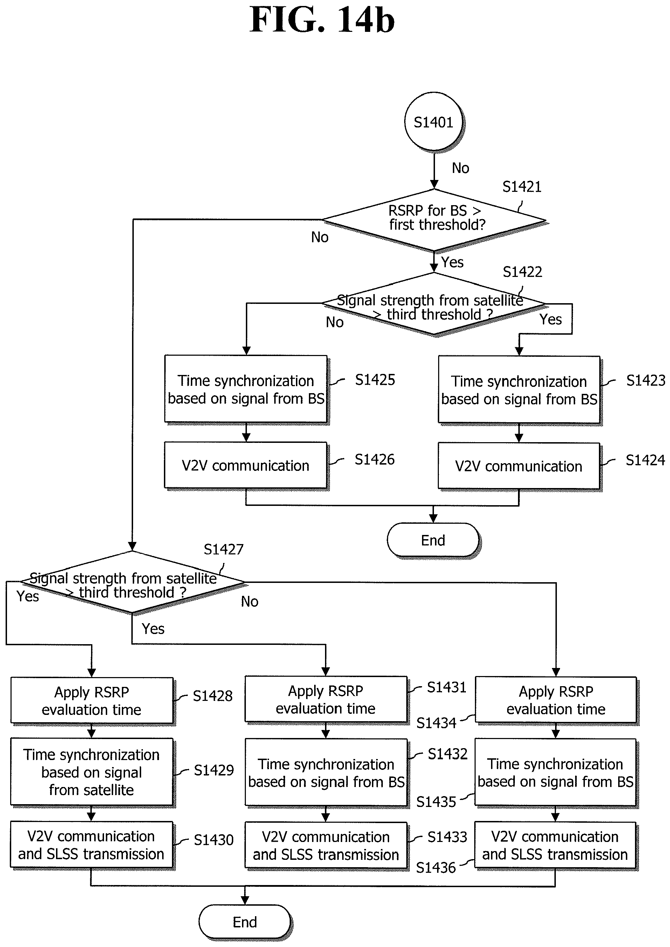

Hereinafter, FIGS. 14A and 14B will be described with reference to the V2V terminal A 100-1 or the V2V terminal B 100-2 illustrated in FIG. 12.

**I-1-1.** Case where priority is signal from satellite> signal from BS

First, referring to the V2V terminal A 100-1 illustrated in FIG. 12, if strength of a signal received by the V2V terminal A 100-1 from the satellite is equal to or greater than the third threshold value (e.g., Thr_GNSS) (i.e., if "YES" in step S1402 in FIG. 14A) and if the RSRP calculated based on the signal received from the BS is smaller than or equal to the first threshold value (e.g., syncTx_Thr_IC) (i.e., if "YES" in step S1403 in FIG. 14A), the V2V terminal A 100-1 adjusts synchronization with the signal (e.g., a GNSS signal) from the satellite (S1404) and subsequently performs V2V communication (transmission and reception (S1405).

Here, a timing for V2V transmission may be as follows. TA (timing advance) = N_{TA}+ N_{TA_Offset}. Here, N_{TA}= 0. The N_{TA_Offset} is an offset value for TA. Here, V2V communication is a side link in which transmission and reception are performed using the same uplink frequency, and thus, N_{TA_Offset} = 624Ts (about 20us, 1Ts = 32.552ns).

Meanwhile, if strength of the signal received by the V2V terminal A 100-1 illustrated in FIG. 12 from the satellite is equal to or greater than the third threshold value (e.g., Thr_GNSS) (i.e., if "YES" in step S1402 in FIG. 14A) but the RSRP calculated based on the signal received from the base station is smaller than the first threshold (e.g., syncTx_Thr_IC) (i.e., if "NO" in step S1403 in FIG. 14A), the V2V terminal A 100-1 may adjust synchronization with the signal (e.g., the GNSS signal) from the satellite (S1407) and subsequently perform V2V communication (transmission and reception) (S1408).

A timing for V2V transmission may be as follows. TA (timing advance) = N_{TA}+ N_{TA_Offset}. Here, N_{TA} = 0. The N_{TA_offset} is an offset value for TA. Here, V2V communication is a side link in which transmission and reception are performed using the same uplink frequency, and thus, N_{TA_Offset} = 624Ts (about 20us, 1Ts = 32.552ns).

As illustrated in step S1408, the V2V terminal A 100-1 may further transmit a sidelink synchronization signal (SLSS). If another terminal located outside the coverage (OoC) does not receive a signal from the satellite (if the other terminal does not have a function to receive the signal from the satellite of if the other terminal has the function to receive the signal but strength of the signal received from the satellite is smaller than the third threshold (e.g., Thr_GNSS), the other terminal may adjust time synchronization using the SLSS.

In order to transmit the SLSS, the V2V terminal A 100-1 applies an RSRP evaluation time (S1406). Specifically, when the RSRP is less than the first threshold (e.g., syncTx_Thr_IC) for a time designated by the RSRP evaluation time, the SLSS is transmitted.

Next, referring to the V2V terminal B 100-2 illustrated in FIG. 12, if signal strength received by the V2V terminal B 100-2 from the satellite is smaller than the third threshold value (e.g., Thr_GNSS) (i.e., if "NO" in step S1402 in FIG. 14A) and if the RSRP calculated based on the signal received from the base station equal to or smaller than the first threshold (e.g., syncTx_Thr_IC), the V2V terminal B 100-2 adjusts synchronization with respect to a synchronization signal from the base station (e.g., with respect to a downlink subframe of the base station) (step S1410)) and subsequently performs V2V communication (transmission and reception) (S1411).

A timing for the V2V transmission may be as follows. TA (timing advance) = N_{TA}+ N_{TA_Offset}. Here, the N_{TA} may be a value corresponding to a first path reception delay time in the downlink from the base station. The N_{TA_offset} is an offset value for TA. Here, V2V communication is a side link in which transmission and reception are performed using the same uplink frequency, and thus, N_{TA_offset} = 624Ts (about 20us, 1Ts = 32.552ns).

Meanwhile, when signal strength received by the V2V terminal B 100-2 illustrated in FIG. 12 from the satellite is smaller than the third threshold value (e.g., Thr_GNSS) (i.e., if "NO" in step S1402 in FIG. 14A) and if the RSRP calculated based on the signal received from the BS is smaller than the first threshold value (e.g., syncTx_Thr_IC) (i.e., if "NO" in step S1409 in FIG. 14A), the V2V terminal B 100-2 adjusts time synchronization with respect to a synchronization signal from the base station (i.e., with respect to a downlink subframe) (S1413) and subsequently performs V2V communication (transmission and reception) (S1414).

A timing for the V2V transmission may be as follows. TA (timing advance) = N_{TA}+ N_{TA_Offset}. Here, the N_{TA} may be a value corresponding to a first path reception delay time in the downlink from the base station. The N_{TA_offset} is an offset value for TA. Here, V2V communication is a side link in which transmission and reception are performed using the same uplink frequency, and N_{TA_Offset} = 624Ts (about 20us, 1Ts = 32.552ns).

As illustrated in step S1414, the V2V terminal B 100-2 further transmits a sidelink synchronization signal (SLSS). If another terminal located outside the coverage (OoC) does not receive a signal from the satellite (if the other terminal does not have a function to receive the signal from the satellite of if the other terminal has the function to receive the signal but strength of the signal received from the satellite is smaller than the third threshold (e.g., Thr_GNSS), the other terminal may adjust time synchronization using the SLSS.

In order to transmit the SLSS, the V2V terminal B 100-2 applies an RSRP evaluation time (S1412). Specifically, when the RSRP is less than the first threshold (e.g., syncTx_Thr_IC) for a time designated by the RSRP evaluation time, the SLSS is transmitted.

**I-1-2.** Case where the priority is signal from BS>signal from satellite

Referring to FIG. 14B based on the V2V terminal A 100-1 illustrated in FIG. 12, if the RSRP calculated based on the signal received by the V2V terminal A 100-1 from the BS is equal to or smaller than the first threshold (e.g., syncTx_Thu_IC) (i.e., if "YES" in S1421 in FIG. 14B) and if signal strength from the satellite is equal to or smaller than the third threshold (e.g., Thr_GNSS) (i.e., if "YES" in step S1422 of FIG. 14B), the V2V terminal A 100-1 of FIG. 12 adjusts time synchronization with respect to a synchronization signal from the BS (i.e., with respect to a downlink subframe) (S1423) and performs V2V communication (transmission and reception) (S1424).

Here, a timing for V2V transmission may be as follows. TA (timing advance) = N_{TA}+ N_{TA_Offset}. Here, the N_{TA} may be a value corresponding to a first path reception delay time in the downlink from the base station. The N_{TA_offset} is an offset value for TA. Here, the V2V communication is a side link in which transmission and reception are performed using the same uplink frequency, and N_{TA_offset} = 624Ts (about 20us, 1Ts = 32.552ns).

Meanwhile, if the RSRP calculated based on the signal received by the V2V terminal B 100-2 from the BS is equal to or smaller than the first threshold (e.g., syncTx_Thr_IC) (i.e., if "YES" in step S1421 of FIG. 14B) and if signal strength from the satellite is smaller than the third threshold (e.g., Thr_GNSS) (i.e., if "NO" in step S1422 of FIG 14B), the V2V terminal B 100-2 illustrated in FIG. 12 adjusts time synchronization with respect to the synchronization signal from the base station (i.e., with respect to a downlink subframe) (S1425) and performs V2V communication (transmission and reception) (S1426).

Here, a timing for the V2V transmission may be as follows. TA (timing advance) = N_{TA}+ N_{TA_Offset}. Here, the N_{TA} may be a value corresponding to a first path reception delay time in the downlink from the base station. The N_{TA_offset} is an offset value for TA. Here, the V2V communication is a side link in which transmission and reception are performed using the same uplink frequency, and N_{TA_offset} = 624Ts (about 20us, 1Ts = 32.552ns).

Meanwhile, if the RSRP calculated based on the signal received by the V2V terminal A 100-1 from the BS is smaller than the first threshold value (e.g., syncTx_Thr_IC) (i.e., if "NO" in step S1421 of FIG. 14B) and if signal strength from the satellite is equal to or smaller than the third threshold (e.g., Thr_GNSS) (that is, if "YES" in step S1427 of FIG. 14B), the V2V terminal A 100-1 adjusts synchronization with the signal (e.g., a GNSS signal) from the satellite (S1429) and subsequently performs V2V communication (transmission and reception) (S1430).

A timing for V2V transmission may be as follows. TA (timing advance) = N_{TA}+ N_{TA_Offset}. Here, N_{TA} = 0. The N_{TA_offset} is an offset value for TA. Here, V2V communication is a side link in which transmission and reception are performed using the same uplink frequency, and N_{TA_offset} = 624Ts (about 20us, 1Ts = 32.552ns).

As illustrated in step S1430 of FIG. 14B, the V2V terminal A 100-1 may further transmit the sidelink synchronization signal (SLSS) as described above. Also, as described above, in order to transmit the SLSS, the V2V terminal A 100-1 may apply the RSRP evaluation time (S1428). For details thereof, the above description will be used.

Alternatively, if the RSRP calculated based on the signal received from the base station by the V2V terminal A 100-1 of FIG. 12 is smaller than the first threshold (e.g., syncTx_Thr_IC) (i.e., if "NO" in step S1421 of FIG. 14B), although signal strength from the satellite is equal to or smaller than the third threshold (e.g., Thr_GNSS) (i.e., if "YES" in step S1427 of FIG. 14B), the V2V terminal A 100-1 may adjust synchronization with respect to a synchronization signal from the base station (e.g., with respect to a downlink subframe of the base station) (S1432) and perform V2V communication (transmission and reception) (S1433).

Here, a timing for the V2V transmission may be as follows. TA (timing advance) = N_{TA}+ N_{TA_Offset}. Here, the N_{TA} may be a value corresponding to a first path reception delay time in the downlink from the base station. The N_{TA_offset} is an offset value for TA. Here, V2V communication is a side link in which transmission and reception are performed using the same uplink frequency, and N_{TA_offset} = 624Ts (about 20us, 1Ts = 32.552ns).

Also, as illustrated in step S1433 of FIG. 14B, the V2V terminal A 100-1 may further transmit the SLSS as described above. Also, as described above, in order to transmit the SLSS, the V2V terminal A 100-1 may apply the RSRP evaluation time (S1431). For details thereof, the above description will be used.

Meanwhile, if the RSRP calculated based on the signal received from the base station by the V2V terminal A 100-1 of FIG. 12 is smaller than the first threshold (e.g., syncTx_Thr_IC) (i.e., if "NO" in step S1421 of FIG. 14B) and if signal strength from the satellite is smaller than the third threshold (e.g., Thr_GNSS) (i.e., if "NO" in step S1427 of FIG. 14B), the V2V terminal B 100-2 may adjust synchronization with respect to a synchronization signal from the base station (e.g., with respect to a downlink subframe of the base station) (S1435) and perform V2V communication (transmission and reception) (S1436).

Here, a timing for the V2V transmission may be as follows. TA (timing advance) = N_{TA}+ N_{TA_Offset}. Here, the N_{TA} may be a value corresponding to the first path reception delay time in the downlink from the base station. The N_{TA_offset} is an offset value for TA. Here, V2V communication is a side link in which transmission and reception are performed using the same uplink frequency, and N_{TA_offset} = 624Ts (about 20us, 1Ts = 32.552ns)

Also, as illustrated in step S1436 of FIG. 14B, the V2V terminal B 100-2 may further transmit the SLSS as described above. Also, as described above, in order to transmit the SLSS, the V2V terminal B 100-2 may apply the RSRP evaluation time (S1434). For details thereof, the above description will be used.

**1-2.** Case where BS provided priority information, second threshold (e.g., synTx_Thr_OoC) for RSRP based on sidelink signal to terminal when terminal was located in coverage, and third threshold (e.g., Thr_GNSS) for signal strength from satellite, but terminal is currently located out of coverage of BS

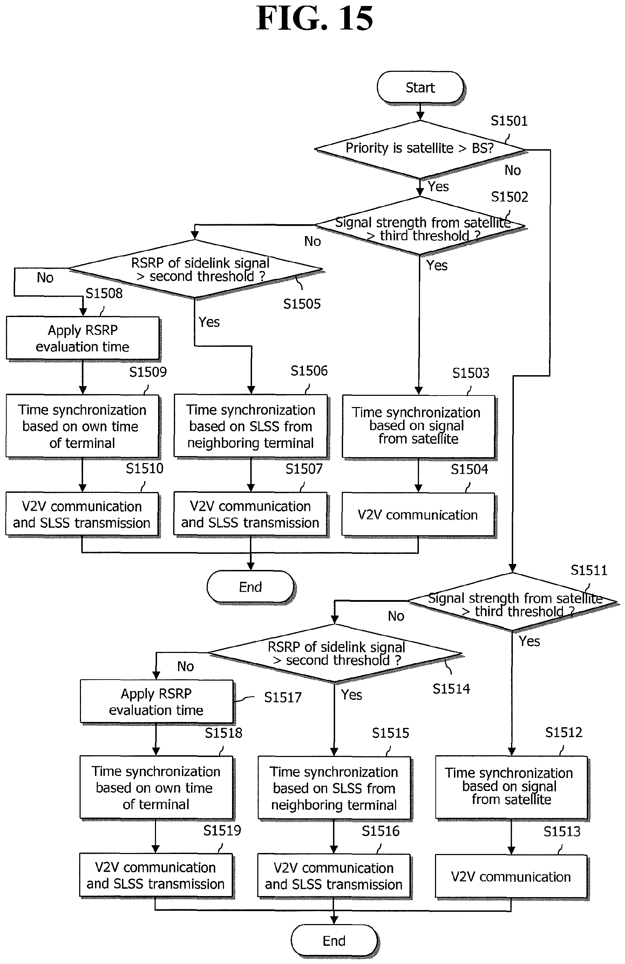

Hereinafter, FIG. 15 will be described with reference to the V2V terminal C 100-3 or the V2V terminal D 100-4 illustrated in FIG. 12

**I-2-1.** Case where priority is signal from satellite>signal from BS

If strength of a signal received from the satellite by the V2V terminal C 100-3 of FIG. 12 is equal to or greater than the third threshold value (e.g., Thr_GNSS) (i.e., if "YES" in step S1502 of FIG. 15), the V2V terminal C 100-3 adjusts synchronization with a signal (e.g., a GNSS signal) from the satellite (S1503) and subsequently performs V2V communication (transmission and reception) (S1504).

Here, a timing for V2V transmission may be as follows. TA (timing advance) = N_{TA}+ N_{TA_Offset}. Here, N_{TA} = 0. Also, the N_{TA_offset} may be 0.

Meanwhile, if strength of a signal received from the satellite by the V2V terminal D 100-4 of FIG. 12 is smaller than the third threshold (e.g., Thr GNSS) (i.e., if "NO" in step S1502 of FIG. 15) and if reception strength (S-RSRP) measured based on a sidelink signal (e.g., SLSS) received from a neighboring terminal is equal to or greater than the second threshold (e.g., synTx_Thr_OoC) (i.e., if "YES" in step S1505 of FIG. 15), the V2V terminal D 100-4 adjusts time synchronization based on the SLSS received from the neighboring terminal (S1506) and performs V2V communication (transmission and reception) (S1507). Here, if SLSSs are received from several neighboring terminals, the V2V terminal D 100-4 adjusts time synchronization with respect to an SLSS from a terminal located in coverage, among the several neighboring terminals. If a terminal located in coverage is not discovered, the V2V terminal D 100-4 adjusts time synchronization with respect to an SLSS having a largest S-RSRP among the received SLSSs.

Here, a timing for V2V transmission may be as follows. TA (timing advance) = N_{TA}+ N_{TA_offset}. Here, N_{TA} = 0. In addition, N_{TA_offset} = 0.

As illustrated in step S1507, the V2V terminal D 100-4 may transmit the SLSS as described above.

Meanwhile, if strength of a signal received from a satellite by the V2V terminal D 100-4 of FIG. 12 is smaller than the third threshold value (e.g., Thr_GNSS) (i.e., if "NO" in step S1502 of FIG. 15) and if reception strength (S-RSRP) measured based on the sidelink signal (e.g., SLSS) received from a neighboring terminal is smaller than the second threshold value (e.g., synTx_Thr_OoC) (i.e., if "NO" in step S1505 of FIG. 15), the V2V terminal D 100-4 adjusts time synchronization with respect to its own time (S1509) and performs V2V communication (transmission and reception) (S1510).

Here, a timing for V2V transmission may be as follows. TA (timing advance) = N_{TA}+ N_{TA_offset}. Here, N_{TA} = 0. In addition, N_{TA_Offset} = 0.

As illustrated in step S1510, the V2V terminal D 100-4 may further transmit the SLSS as described above. In order to transmit the SLSS, the RSRP evaluation time may be applied (S1508). For details thereof, the above description will be used.

**1-2-2.** Case where priority is signal from BS> signal from satellite

If strength of a signal received from the satellite by the V2V terminal C 100-3 illustrated in FIG. 12 is equal to or greater than the third threshold (e.g., Thr_GNSS) (i.e., if "YES" in step S1511 of FIG. 15), the V2V terminal C 100-3 adjusts synchronization with the signal (e.g., the GNSS signal) from the satellite (S1512) and subsequently performs V2V communication (transmission and reception) (S1513).

Here, a timing for V2V transmission may be as follows. TA (timing advance) = N_{TA}+N_{TA_Offset}. Here, N_{TA} = 0. In addition, N_{TA_Offset} = 0.

Meanwhile, if strength of the signal received from the satellite by the V2V terminal D 100-4 illustrated in FIG. 12 is smaller than the third threshold (e.g., Thr_GNSS) (i.e., if "NO" in step S1511 of FIG. 15) and if reception strength (S-RSRP) measured based on a sidelink signal (e.g., SLSS) received from a neighboring terminal is equal to or greater than the second threshold (e.g., synTx_Thr_OoC) (i.e., if "YES" in step S1514 of FIG. 15), the V2V terminal D 100-4 adjusts time synchronization with respect to the SLSS received from the neighboring terminal (S1515) and performs V2V communication (transmission and reception)) (S1516). Here, if SLSSs are received from several neighboring terminals, the V2V terminal D 100-4 adjusts time synchronization with respect to an SLSS from a terminal located in coverage, among the several neighboring terminals. If a terminal located in coverage is not discovered, the V2V terminal D 100-4 adjusts time synchronization with respect to an SLSS having a largest S-RSRP among the received SLSSs.

Here, a timing for V2V transmission may be as follows. TA (timing advance) = NTA+ N_{TA_offset}. Here, N_{TA} = 0. In addition, N_{TA_offset} = 0.

As illustrated in step S1516, the V2V terminal D 100-4 may further transmit the SLSS as described above. For details thereof, the above description will be used.

Meanwhile, if strength of a signal received from a satellite by the V2V terminal D 100-4 of FIG. 12 is smaller than the third threshold value (e.g., Thr_GNSS) (i.e., if "NO" in step S1511 of FIG. 15) and if reception strength (S-RSRP) measured based on the sidelink signal (e.g., SLSS) received from a neighboring terminal is smaller than the second threshold value (e.g., synTx_Thr_OoC) (i.e., if "NO" in step S1514 of FIG. 15), the V2V terminal D 100-4 adjusts time synchronization with respect to its own time (S1518) and performs V2V communication (transmission and reception) (S1519).

Here, a timing for V2V transmission may be as follows. TA (timing advance) = N_{TA}+ N_{TA}__{Offset}. Here, N_{TA} = 0. In addition, N_{TA_Offset} = 0.

As illustrated in step S1519, the V2V terminal D 100-4 may further transmit the SLSS as described above. In order to transmit the SLSS, the RSRP evaluation time may be applied (S1517). For details thereof, the above description will be used.

**I-3.** Case where BS provides first threshold (e.g., syncTx_Thr_IC) to terminal located in-coverage of BS and not capable of receiving satellite signal

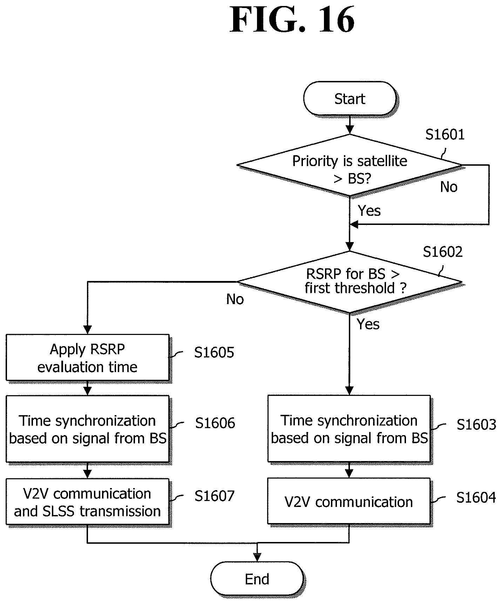

Hereinafter, FIG. 16 will be described with reference to the V2V terminal A 100-1 or the V2V terminal B 100-2 illustrated in FIG. 12.

First, it is assumed that the V2V terminal A 100-1 or the V2V terminal B 100-2 does not have the capability of receiving satellite signals. Since the terminal does not have the capability of receiving satellite signals, the BS may provide priority information indicating that highest priority is a signal from the BS or may not provide the priority information.

If RSRP calculated based on a signal received from the BS by the V2V terminal A 100-1 and the V2V terminal B 100-2 in FIG. 12 is equal to or smaller than the first threshold (e.g., syncTx_Thr_IC) (i.e., if "YES" in step S1602 of FIG. 16), the V2V terminal A 100-1 and the V2V terminal B 100-2 adjust time synchronization with reference to a synchronization signal (i.e., with respect to a downlink subframe) from the BS (S1603) and subsequently perform V2V communication (transmission and reception) (S1604).

Here, a timing for V2V transmission may be as follows. TA (timing advance) = N_{TA}+ N_{TA_offset}. Here, the N_{TA} may be a value corresponding to a first path reception delay time in the downlink from the BS. The N_{TA_Offset} is an offset value for TA. Here, V2V communication is a side link in which transmission and reception are performed using the same uplink frequency, and N_{TA_offset} = 624Ts (about 20us, 1Ts = 32.552ns).

Meanwhile, if the RSRP calculated based on the signal received from the BS by the V2V terminal A 100-1 and the V2V terminal B 100-2 of FIG. 12 is smaller than the first threshold value (e.g., syncTx_Thr_IC) (i.e., if "NO" in step S1602 of FIG. 16), the V2V terminal A 100-1 and the V2V terminal B 100-2 adjust time synchronization with reference to a synchronization signal (i.e., with respect to a downlink subframe) from the BS (S1606) and subsequently perform V2V communication (transmission and reception) (S1607).

In this case, a timing for the V2V transmission may be as follows. TA (timing advance) = N_{TA}+N_{TA_Offset}. Here, the N_{TA} may be a value corresponding to the first path reception delay time in the downlink from the base station. The N_{TA_Offset} is an offset value for TA. Here, V2V communication is a side link in which transmission and reception are performed using the same uplink frequency, and N_{TA_offset} = 624Ts (about 20us, 1Ts = 32.552ns).

Also, as illustrated in step S1607, the V2V terminal A (100-1) and the V2V terminal B (100-2) may transmit the SLSS as described above. In order to transmit the SLSS, the RSRP evaluation time may be applied (S1605). For details thereof, the above description will be used.

**I-4.** Case where BS provided second threshold (e.g., synTx_Thr_OoC) when terminal not capable of receiving satellite signal was located in coverage but the terminal is currently out of coverage of BS

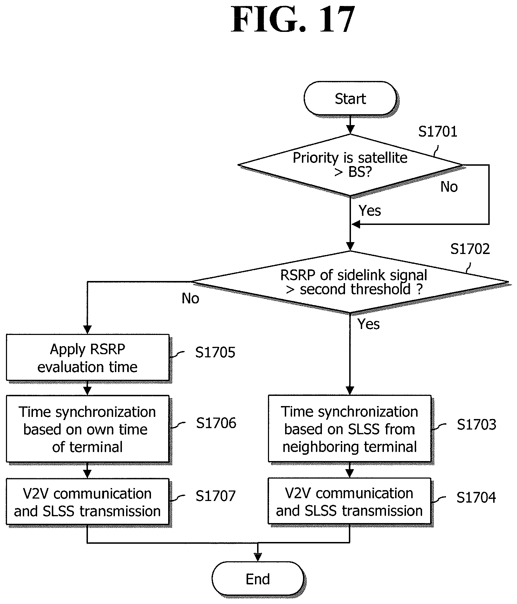

Hereinafter, FIG. 17 will be described with reference to the V2V terminal C 100-3 or the V2V terminal D 100-4 illustrated in FIG. 12.

First, it is assumed that the V2V terminal C 100-3 or the V2V terminal D 100-4 does not have the capability of receiving satellite signals. Since the terminal does not have the capability of receiving satellite signals, the BS may provide priority information indicating that highest priority is a signal from the BS or may not provide the priority information.

If signal strength S-RSRP measured based on a sidelink signal (e.g., SLSS) received from a neighboring terminal by each of the V2V terminal C 100-3 and the V2V terminal D 100-4 of FIG. 12 is equal to or smaller than the second threshold value (e.g., synTx_Thr_OoC) (i.e., if "YES" in step S1702 of FIG. 17), the V2V terminal C 100-3 and the V2V terminal D 100-4 each adjust time synchronization with respect to the SLSS received from the neighboring terminal (S1703) and perform V2V communication (transmission and reception) (S1704). Here, if SLSSs are received from several neighboring terminals, the V2V terminal D 100-4 adjusts time synchronization with respect to an SLSS from a terminal located in coverage, among the several neighboring terminals. If a terminal located in coverage is not discovered, the V2V terminal D 100-4 adjusts time synchronization with respect to an SLSS having a largest S-RSRP among the received SLSSs.

Here, a timing for V2V transmission may be as follows. TA (timing advance) = N_{TA}+N_{TA_Offset}. Here, NTA = 0. In addition, N_{TA_offset} = 0.

As illustrated in step S1704, the V2V terminal C 100-3 and the V2V terminal D 100-4 may transmit the SLSS as described above. For details thereof, the above description will be used.

Meanwhile, if the signal strength S-RSRP measured based on the sidelink signal (e.g., SLSS) received from a neighboring terminal by each of the V2V terminal C 100-3 and the V2V terminal D 100-4 of FIG. 12 is smaller than the second threshold value (e.g., synTx_Thr_OoC) (i.e., if "NO" in step S1702 of FIG. 17), the V2V terminal C 100-3 and the V2V terminal D 100-4 adjust time synchronization based on its own time (S1706) and subsequently perform V2V communication (transmission and reception) (S1707).

Here, a timing for V2V transmission may be as follows. TA (timing advance) = N_{TA}+NT_{A_Offset}. Here, NTA = 0. In addition, N_{TA_offset} = 0.

As illustrated in step S1707, the V2V terminal C 100-3 and the V2V terminal D 100-4 may transmit the SLSS as described above. In order to transmit the SLSS, the RSRP evaluation time may be applied (S1705). For details thereof, the above description will be used.

### II. Scheme 2: Use synchronization signal from base station when terminal is located in coverage of BS and use signal from satellite when out of coverage

According to scheme 2, capability information transmitted by the terminal 100 in FIG. 13 may not include information on whether the terminal is capable of receiving a signal from a satellite. In this case, the BS 200 may not transmit priority information to the terminal 100. However, the BS 200 may transmit at least one of the first threshold (e.g., syncTx_Thr_IC), the second threshold (e.g., synTx_Thr_OoC), and the third threshold (e.g., Thr_GNSS) to the terminal.

**II-1**. Case where first threshold (e.g., syncTx_Thr_IC) is provided to terminal located in coverage of BS

Hereinafter, FIG. 16 will be described with reference to the V2V terminal A 100-1 or the V2V terminal B 100-2 illustrated in FIG. 12.

If RSRP calculated based on a signal received from the BS by the V2V terminal A 100-1 and the V2V terminal B 100-2 in FIG. 12 is equal to or smaller than the first threshold (e.g., syncTx_Thr_IC) (i.e., if "YES" in step S1602 of FIG. 16), the V2V terminal A 100-1 and the V2V terminal B 100-2 adjust time synchronization with reference to a synchronization signal (i.e., with respect to a downlink subframe) from the BS (S1603) and subsequently perform V2V communication (transmission and reception) (S1604).

Here, a timing for V2V transmission may be as follows. TA (timing advance) = N_{TA}+ N_{TA_offset}. Here, the N_{TA} may be a value corresponding to a first path reception delay time in the downlink from the BS. The N_{TA_offset} is an offset value for TA. Here, V2V communication is a side link in which transmission and reception are performed using the same uplink frequency, and N_{TA_offset} = 624Ts (about 20us, ITs = 32.552ns).

Meanwhile, if the RSRP calculated based on the signal received from the BS by the V2V terminal A 100-1 and the V2V terminal B 100-2 of FIG. 12 is smaller than the first threshold value (e.g., syncTx_Thr_IC) (i.e., if "NO" in step S1602 of FIG. 16), the V2V terminal A 100-1 and the V2V terminal B 100-2 adjust time synchronization with reference to a synchronization signal (i.e., with respect to a downlink subframe) from the BS (S1606) and subsequently perform V2V communication (transmission and reception) (S1607).

In this case, a timing for the V2V transmission may be as follows. TA (timing advance) = N_{TA}+N_{TA_Offset}. Here, the N_{TA} may be a value corresponding to the first path reception delay time in the downlink from the base station. The N_{TA_offset} is an offset value for TA. Here, V2V communication is a side link in which transmission and reception are performed using the same uplink frequency, and N_{TA_offset} = 624Ts (about 20us, 1Ts = 32.552ns).

As illustrated in step S1607, the V2V terminal A 100-1 and the V2V terminal B 100-2 may transmit SLSS as described above. For details thereof, the above description will be used.

**II-2.** Case where BS provides second threshold (E.g., synTx_Thr_OoC) and third threshold (e.g., Thr_GNSS) when terminal is located in coverage, but terminal is currently out of coverage of BS

Hereinafter, FIG. 15 will be described with reference to the V2V terminal C 100-3 or the V2V terminal D 100-4 illustrated in FIG. 12.

If strength of a signal received from the satellite by the V2V terminal C 100-3 illustrated in FIG. 12 is equal to or greater than the third threshold (e.g., Thr_GNSS) (i.e., if "YES" in step S1502 of FIG. 15), the V2V terminal C 100-3 adjusts synchronization with the signal (e.g., the GNSS signal) from the satellite (S1503) and subsequently performs V2V communication (transmission and reception) (S1504).

Here, a timing for V2V transmission may be as follows. TA (timing advance) = N_{TA}+N_{TA_Offset}. Here, NTA = 0. In addition, N_{TA_offset} = 0.

Meanwhile, if strength of the signal received from the satellite by the V2V terminal D 100-4 illustrated in FIG. 12 is smaller than the third threshold (e.g., Thr_GNSS) (i.e., if "NO" in step S1502 of FIG. 15) and if reception strength (S-RSRP) measured based on a sidelink signal (e.g., SLSS) received from a neighboring terminal is equal to or greater than the second threshold (e.g., synTx_Thr_OoC) (i.e., if "YES" in step S1505 of FIG. 15), the V2V terminal D 100-4 adjusts time synchronization with respect to the SLSS received from the neighboring terminal (S1506) and performs V2V communication (transmission and reception)) (S1507). Here, if SLSSs are received from several neighboring terminals, the V2V terminal D 100-4 adjusts time synchronization with respect to an SLSS from a terminal located in coverage, among the several neighboring terminals. If a terminal located in coverage is not discovered, the V2V terminal D 100-4 adjusts time synchronization with respect to an SLSS having a largest S-RSRP among the received SLSSs.

Here, a timing for V2V transmission may be as follows. TA (timing advance) = N_{TA}+N_{TA_offset}. Here, NTA = 0. In addition, N_{TA_offset} = 0.

As illustrated in step S1507 of FIG. 15, the V2V terminal D 100-4 may transmit SLSS as described above. For details thereof, the above description will be used.

Meanwhile, if strength of a signal received from a satellite by the V2V terminal D 100-4 of FIG. 12 is smaller than the third threshold value (e.g., Thr_GNSS) (i.e., if "NO" in step S1502 of FIG. 15) and if reception strength (S-RSRP) measured based on the sidelink signal (e.g., SLSS) received from a neighboring terminal is smaller than the second threshold value (e.g., synTx_Thr_OoC) (i.e., if "NO" in step S1505 of FIG. 15), the V2V terminal D 100-4 adjusts time synchronization with respect to its own time (S1509) and performs V2V communication (transmission and reception) (S1510).

Here, a timing for V2V transmission may be as follows. TA (timing advance) = N_{TA}+N_{TA_Offset}. Here, NTA = 0. In addition, N_{TA_offset} = 0.

As illustrated in step S1510 of FIG. 15, the V2V terminal D 100-4 may transmit SLSS as described above. For details thereof, the above description will be used.

**II-3.** Case where BS provided second threshold (e.g., synTx_Thr_OoC) when terminal not capable of receiving satellite signal is located in coverage, but terminal is currently out of coverage of BS

Hereinafter, FIG. 17 will be described with reference to the V2V terminal C 100-3 or the V2V terminal D 100-4 illustrated in FIG. 12.

If signal strength S-RSRP measured based on a sidelink signal (e.g., SLSS) received from a neighboring terminal by each of the V2V terminal C 100-3 and the V2V terminal D 100-4 illustrated in FIG. 12 is equal to or smaller than the second threshold value (e.g., synTx_Thr_OoC) (i.e., if "YES" in step S1702 of FIG. 17), the V2V terminal C 100-3 and the V2V terminal D 100-4 adjust time synchronization with respect to the SLSS received from the neighboring terminal (S1703) and perform V2V communication (transmission and reception) (S1704). Here, if SLSSs are received from several neighboring terminals, the V2V terminal D 100-4 adjusts time synchronization with respect to an SLSS from a terminal located in coverage, among the several neighboring terminals. If a terminal located in coverage is not discovered, the V2V terminal D 100-4 adjusts time synchronization with respect to an SLSS having a largest S-RSRP among the received SLSSs.

Here, a timing for V2V transmission may be as follows. TA (timing advance) = N_{TA}+N_{TA_Offset}. Here, NTA = 0. In addition, N_{TA_offset} = 0.

As illustrated in step S1704 of FIG. 17, the V2V terminal C 100-3 and the V2V terminal D 100-4 may transmit the SLSS as described above. For details thereof, the above description will be used.

If the reception strength S-RSRP measured based on the sidelink signal (e.g., SLSS) received from a neighboring terminal by each of the V2V terminal C 100-3 and the V2V terminal D 100-4 illustrated in FIG. 12 is smaller than the second threshold value (e.g., synTx_Thr_OoC) (i.e., if "NO" in step S1702 of FIG. 17), the V2V terminal C 100-3 and the V2V terminal D 100-4 adjust time synchronization based on its own time (S1706) and subsequently perform V2V communication (transmission and reception) (S1707).

Here, a timing for V2V transmission may be as follows. TA (timing advance) = N_{TA}+N_{TA_offset}. Here, NTA = 0. In addition, N_{TA_offset} = 0.

As illustrated in step S1707 of FIG. 17, the V2V terminal C 100-3 and the V2V terminal D 100-4 may transmit the SLSS as described above. In order to transmit the SLSS, the RSRP evaluation time may be applied (S1705). For details thereof, the above description will be used.

The embodiments of the present disclosure described so far may be implemented by various means. For example, embodiments of the present invention may be implemented by hardware, firmware, software, or a combination thereof. More specifically, the embodiment will be described with reference to the drawings.

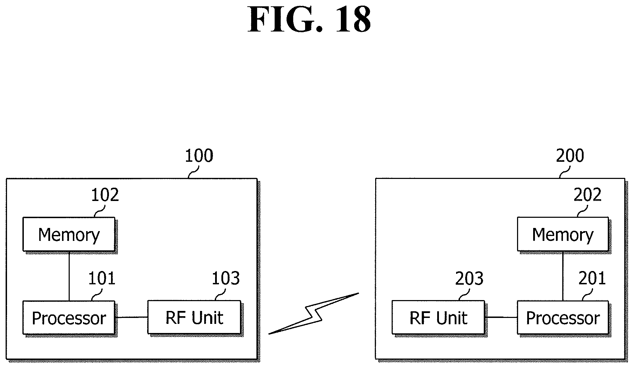

**FIG. 18** **is a block diagram illustrating a wireless communication system implementing the present disclosure.**

A BS 200 includes a processor 201, a memory 202, and a radio frequency (RF) unit 203. The memory 202 may be connected to the processor 201 to store various types of information for driving the processor 201. The RF unit 203 may be connected to the processor 201 to transmit and/or receive a wireless signal. The processor 201 implements the proposed functions, processes and/or methods. The operation of the BS in the embodiment described above may be implemented by the processor 201.

The UE 100 includes a processor 101, a memory 102, and a radio frequency (RF) unit 103. The memory 102 may be connected to the processor 101 to store various types of information for driving the processor 101. The RF unit 103 may be connected to the processor 101 to transmit and/or receive a wireless signal. The processor 101 implements the proposed functions, processes and/or methods.

The processor may include Application-Specific Integrated Circuits (ASICs), other chipsets, logic circuits, and/or data processors. The memory may include Read-Only Memory (ROM), Random Access Memory (RAM), flash memory, memory cards, storage media and/or other storage devices. The RF unit may include a baseband circuit for processing a radio signal. When the above-described embodiment is implemented in software, the above-described scheme may be implemented using a module (process or function) which performs the above function. The module may be stored in the memory and executed by the processor. The memory may be disposed to the processor internally or externally and connected to the processor using a variety of well-known means.

In the above exemplary systems, although the methods have been described on the basis of the flowcharts using a series of the steps or blocks, the present invention is not limited to the sequence of the steps, and some of the steps may be performed at different sequences from the remaining steps or may be performed simultaneously with the remaining steps. Furthermore, those skilled in the art will understand that the steps shown in the flowcharts are not exclusive and may include other steps or one or more steps of the flowcharts may be deleted without affecting the scope of the present invention.

## Claims

1. A method for receiving a synchronization signal, the method performed by a terminal and comprising:
determining whether or not a first synchronization signal from a base station has a higher priority than a second synchronization signal from a global navigation satellite system (GNSS), if the terminal has a capability of receiving the second synchronization signal from the GNSS; an
if it is determined that the first synchronization signal from the base station has the higher priority and if a signal strength from the base station is lower than or equal to a threshold, transmitting a sidelink synchronization signal (SLSS).

2. The method of claim 1, further comprising:
performing a time synchronization based on the second synchronization signal if it is determined that the first synchronization signal has the higher priority, but if the signal strength from the base station is lower than or equal to the threshold; an
performing a vehicle to vehicle (V2V) communication after performing the time synchronization.

3. The method of claim 1, further comprising:
receiving information on whether the first synchronization signal has the higher priority than the second synchronization signal or not.

4. The method of claim 1, further comprising:
transmitting, to the base station, capability information on whether the terminal has the capability of receiving the second synchronization signal or not

5. The method of claim 1, further comprising:
transmitting the SLSS if the second synchronization signal has the higher priority than the first synchronization signal, but if the signal strength from the base station is lower than or equal to the threshold.

6. A terminal for receiving a synchronization signal, the terminal comprising:
a processor configured to determine whether or not a first synchronization signal from a base station has a higher priority than a second synchronization signal from a global navigation satellite system (GNSS), if the terminal has a capability of receiving the second synchronization signal from the GNSS; and
a transceiver configured to transmit a sidelink synchronization signal (SLSS), if it is determined that the first synchronization signal from the base station has the higher priority and if a signal strength from the base station is lower than or equal to a threshold.

7. The terminal of claim 6, wherein the processor is further configured to:
perform a time synchronization based on the second synchronization signal if it is determined that the first synchronization signal has the higher priority, but if the signal strength from the base station is lower than or equal to the threshold; and
perform a vehicle to vehicle (V2V) communication after performing the time synchronization.

8. The terminal of claim 6, wherein the transceiver is further configured to:
receive information on whether the first synchronization signal has the higher priority than the second synchronization signal or not.

9. The terminal of claim 6, wherein the transceiver is further configured to:
transmit capability information on whether the terminal has the capability of receiving the second synchronization signal or not.

10. The terminal of claim 6, wherein the transceiver is further configured to:
transmit the SLSS if the second synchronization signal has the higher priority than the first synchronization signal, but if the signal strength from the base station is lower than or equal to the threshold.
